# EUROPÄISCHE PATENTANMELDUNG

(11) **EP 1 591 999 A1**
(43) Veröffentlichungstag der Anmeldung: **02.11.2005**
(21) Anmeldenummer: 04008145.7
(22) Anmeldetag: 02.04.2004
(51) Int. Cl.: G11B 7/08, G02B 7/02, G06K 7/10

(54) **Optisches Modul und Verfahren zur Herstellung**

(71) Anmelder: DEUTSCHE THOMSON-BRANDT GMBH, 78048 Villingen-Schwenningen (DE)
(72) Erfinder: Baas, Reiner, 77790 Steinach (DE); Tabor, Guenter, 78056 Villingen-Schwenningen (DE); Dupper, Rolf, 78050 Villingen-Schwenningen (DE)
(74) Vertreter: Arnold, Klaus-Peter

(57) **Zusammenfassung**

Verfahren zur Anordnung einer optischen Abtasteinheit (A) auf einem optischen Gehäuse (6), wobei die optische Abtasteinheit über dem optischen Gehäuse justiert wird und ohne Verwendung einer Stahlgrundplatte nach der Justierung auf dem optischen Gehäuse befestigt wird. Die optische Abtasteinheit wird insbesondere unter Verwendung eines Klebers (b') oder eines anderen Befestigungsmittels nach der Justierung auf dem optischen Gehäuse befestigt.

Hierdurch wird eine bisher verwendete Stahlgrundplatte für die optische Abtasteinheit nicht mehr benötigt. Das optische Modul wird hierdurch leichter, und es werden weniger Teile benötigt. Durch die Verklebung der optischen Abtasteinheit mit dem optischen Gehäuse wird das optische Modul deutlich kostengünstiger.

## Beschreibung

Bei optischen Laufwerken zum Lesen und Beschreiben von optischen Speicherplatten, beispielsweise CDs oder DVDs, muss die Abtasteinheit eines optischen Moduls präzise auf die Speicherplatte ausgerichtet sein. Hierdurch wird ein hoher Anteil des reflektierten Lichts des in dem optischen Modul integrierten Lasers wieder in die Abtasteinheit zurückreflektiert. Das rückreflektierte Licht wird in dem optischen Modul zur Gewinnung der digitalen Daten verwendet, indem das Licht in elektrische Signale gewandelt wird.

Bei einer bekannten Lösung ist die Abtasteinheit auf einer Stahlgrundplatte angeordnet, über die diese verstellt wird. Die Strahlgrundplatte ist hierbei in einer kugelförmig ausgebildeten Gleitfläche angeordnet, durch die diese in zwei Drehrichtungen verkippbar ist. Diese Gleitfläche ist ein Teil des optischen Gehäuses des Moduls und ist zum Beispiel aus Zinkdruckguss oder Kunststoff gefertigt. Die Fokuslinse der Abtasteinheit ist hierbei auf einem Linsenhalter angeordnet, der in einem Magnetfeld beweglich angeordnet ist und zur Fokuseinstellung über das Magnetfeld in einer Richtung einstellbar ist. Die Stahlgrundplatte wird hierbei als magnetischer Rückfluss für das Magnetfeld verwendet.

Aus der US 5,508,851 ist eine optische Abtasteinheit bekannt, die einen Einstellmechanismus zum Justieren der Fokuslinse aufweist. Die optische Abtasteinheit ist hierbei über eine zylindrische Grundfläche in einer Drehrichtung verstellbar sowie über eine zweite zylindrische Grundfläche in einer hierzu orthogonalen Drehrichtung verstellbar. Hierdurch wird die Fokuslinse zur optischen Speicherplatte ausgerichtet. Das reflektierte Licht wird hierdurch über die selben optischen Elemente, die auch für das Laserlicht verwendet werden, rückübertragen und über einen halbdurchlässigen Spiegel und eine Linse auf einer Fotodiode konzentriert.

Die Fokuslinse ist hierbei in einem Linsenhalter integriert, der beweglich aufgehängt ist, so dass übereine Variation des Abstandes zwischen Speicherplatte und Fokuslinse der Fokus dieser Linse auf der Speicherplatte liegt, so dass das Laserlicht auf einen punktförmigen Abtastfleck konzentriert wird.

Aufgabe der Erfindung ist es, ein optisches Modul der vorangehend genannten Art sowie ein Verfahren zu dessen Herstellung anzugeben, das einen kostengünstigen Aufbau aufweist.

Diese Aufgabe wird durch ein Verfahren nach dem Anspruch 1 sowie durch ein optisches Modul nach dem Anspruch 6 gelöst. Vorteilhafte Weiterbildungen der Erfindung sind in den Unteransprüchen angegeben.

Nach der Erfindung weist das optische Modul eine optische Abtasteinheit auf, die mit Hilfe eines Positioniermechanismus ausgerichtet wird. Der Positioniermechanismus greift an der optischen Abtasteinheit an, insbesondere an einer Leiterplatte oder an deren Leiterplattenhalter, und über eine Verstellung des Positioniermechanismusses wird die Abtasteinheit ausgerichtet. Die Abtasteinheit befindet sich hierbei oberhalb des optischen Gehäuses. Nach der Ausrichtung der optischen Abtasteinheit wird der verbleibende Luftspalt durch eine Verklebung, die diesen Luftspalt zumindest teilweise ausfüllt, fixiert. Das optische Gehäuse wurde hierbei vorher bereits auf einen Lichtstrahl, der zur Justierung der optischen Abtasteinheit verwendet wird, ausgerichtet.

Hierdurch wird die bisher verwendete Stahlgrundplatte für die optische Abtasteinheit nicht mehr benötigt, da die Einstellung jetzt über den Leiterplattenhalter beziehungsweise über die Leiterplatte vorgenommen wird. Hierdurch werden auch keine Verstellschrauben mehr benötigt. Das optische Modul wird hierdurch leichter, und es werden weniger Teile benötigt. Um den verringerten magnetischen Rückschluss auszugleichen, können beispielsweise stärkere Magnete verwendet werden. Alternativ kann eine extra angeordnete, kleine Stahlplatte verwendet werden, die nur noch dem magnetischen Rückschluss dient. Durch die Verklebung der optischen Abtasteinheit mit dem optischen Gehäuse wird dieses deutlich kostengünstiger.

Bevorzugte Ausführungsbeispiele der Erfindung werden im folgenden beispielhaft anhand von schematischen Zeichnungen näher erläutert. Es zeigen:
- Fig. 1 - 3: eine optische Abtasteinheit mit einer Stahlgrundplatte die auf einem optischen Gehäuse angeordnet ist, in drei verschiedenen Ansichten,
- Fig. 4 - 6: eine optische Abtasteinheit nach der Erfindung, bei der die Ausrichtung über den Leiterplattenhalter vorgenommen ist, in drei verschiedenen Ansichten,
- Fig. 7 - 9: eine optische Abtasteinheit nach der Erfindung, bei der die Verstellung über die Leiterplatte vorgenommen ist, in drei verschiedenen Ansichten,
- Fig. 10: eine Anordnung zur Justierung eines optischen Gehäuses mit Hilfe einer Justierplatte und
- Fig. 11: eine Anordnung zum Justieren einer optischen Abtasteinheit über einem optischen Gehäuse.

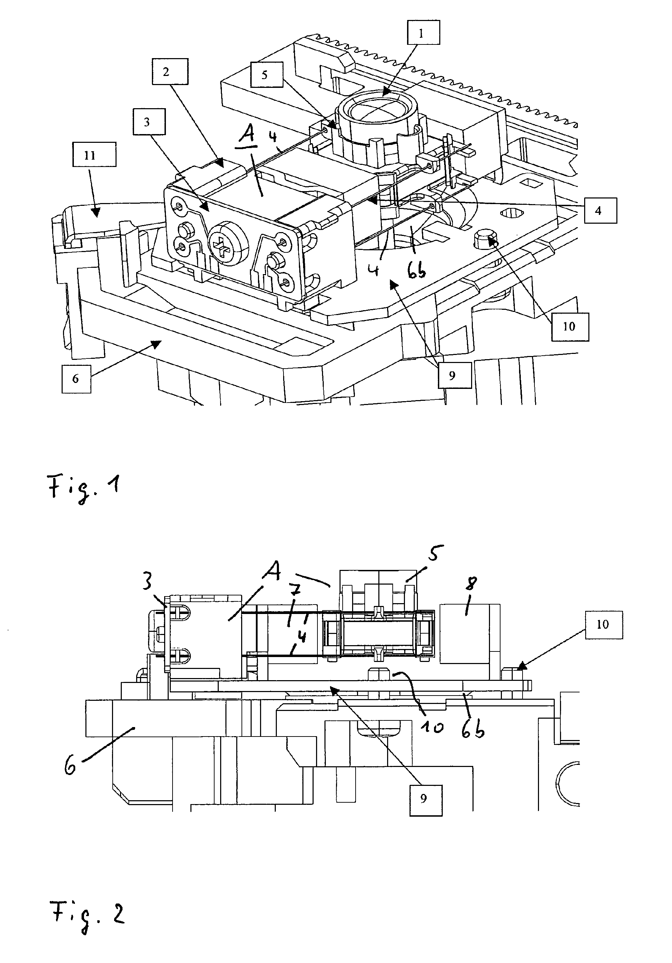

In der Figur 1 ist eine optische Abtasteinheit A mit einer Stahlgrundplatte 9 dargestellt, die nach dem Stand der Technik auf einem optischen Gehäuse 6 angeordnet ist. Die Stahlgrundplatte 9 und hiermit die optische Abtasteinheit A werden über Stellschrauben 10 in bezug auf das optische Gehäuse 6 eingestellt bzw. justiert. Eine Gegenfeder 11 sorgt hierbei für eine feste Auflage in einer Kugelfläche 6b des optischen Gehäuses 6.

Die optische Abtasteinheit enthält eine Leiterplatte 3 und einen Leiterplattenhalter 2, der direkt an der Stahlgrundplatte 9 befestigt sind. Über Drähte 4 ist ein Linsenhalter 5 mit einer Fokuslinse 1 an dem Leiterplattenhalter 2 befestigt. Wird die Stahlgrundplatte 9 durch die Verstellschrauben 10 gekippt, so wird über die Leiterplatte 3 und die Drähte 4 der Linsenhalter mit der Fokuslinse 1 eingestellt. Über die Kugelfläche 6b wird daher die gesamte optische Abtasteinheit A verkippt.

Die Anordnung der Figur 1 ist in der Figur 2 in einer Seitenansicht dargestellt. Hierdurch wird sichtbar, wie die optische Abtasteinheit A mit der Stahlgrundplatte 9 über die Kugelfläche 6b auf dem optischen Gehäuse 6 angeordnet ist. Über zwei Verstellschrauben 10 kann durch diese Lagerung daher die optische Abtasteinheit A in zwei zueinander orthogonalen Drehrichtungen eingestellt werden.

Die optische Abtasteinheit weist weiterhin zwei Magnete 7 und 8 auf, die einen magnetischen Rückschluss über die Strahlgrundplatte 9 haben, auf der sie angeordnet sind, und in deren Magnetfeld sich der über die Drähte 4 gehaltene Linsenhalter 5 befindet. Der Linsenhalter 5 weist insbesondere elektrische Spulen auf, nicht dargestellt, die über die Drähte 4 mit der Leiterplatte 3 verbunden sind, und durch diese bestromt werden. Hierdurch kann ein Tracking der Fokuslinse bewirkt werden, wenn eine optische Speicherplatte abgespielt wird.

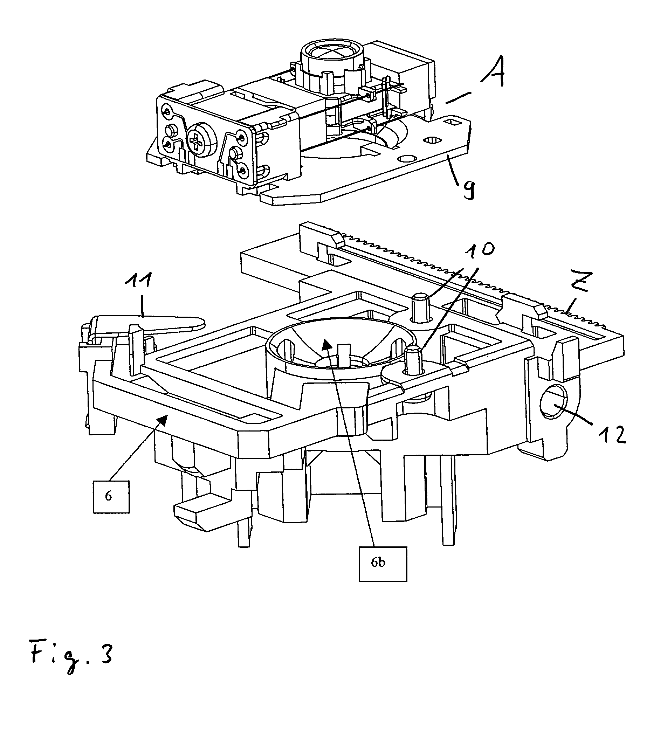

In der Figur 3 ist die in den Figuren 1 und 2 dargestellte optische Abtasteinheit A und das optische Gehäuse 6 in einer Explosionsansicht gezeichnet. Hierdurch wird die Kugelfläche 6b sichtbar, über der die optische Abtasteinheit A angeordnet ist. Weiterhin dargestellt sind die Verstellschrauben 10 und die Feder 11 des optischen Gehäuses 6. Über einen Zahnkranz Z wird das optische Gehäuse 6 mit der optischen Abtasteinheit A radial verschoben in bezug auf die optische Speicherplatte, um die Speicherplatte über ihre gesamte Fläche abzutasten, wenn diese rotiert. Die Anordnung nach der Figur 3 ist auf bekannte Weise beispielsweise in einem DVD Spieler, CD Spieler oder DVD Recorder integriert. Das optische Modul mit dem optischen Gehäuse 6 und der optischen Abtasteinheit A sitzt hierbei auf eine Welle, nicht dargestellt; auf der das optische Gehäuse 6 über eine Öffnung 12 angeordnet ist für eine transversale Bewegung.

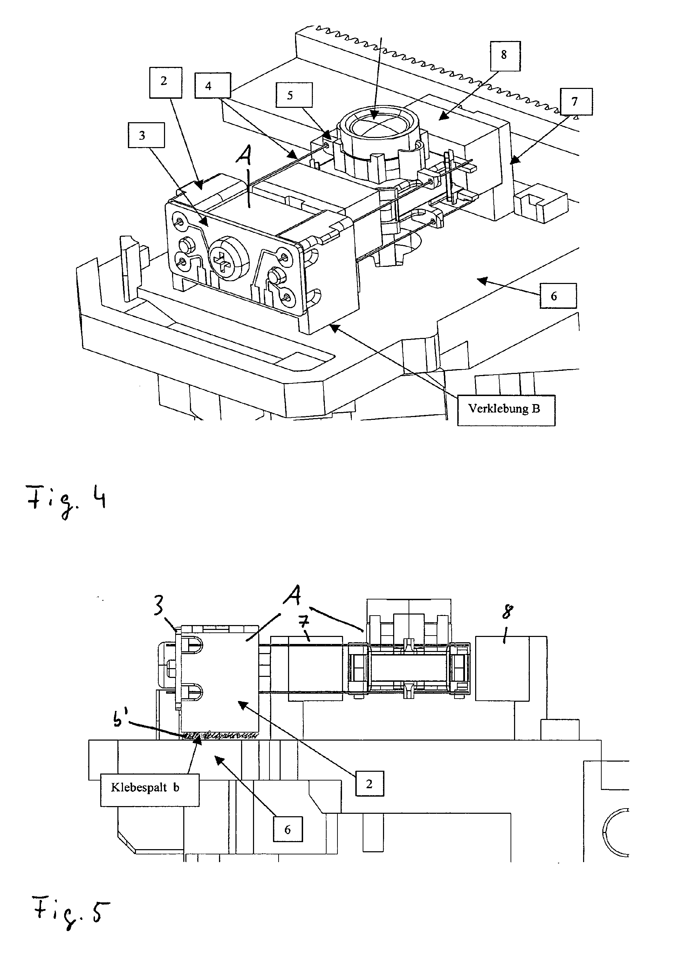

Ein erstes bevorzugtes Ausführungsbeispiel der Erfindung ist in einer Isoansicht in der Figur 4 dargestellt. Die Anordnung nach der Figur 4 entspricht im wesentlichen der der Figur 1, jedoch ist hier die Stahlgrundplatte 9 weggelassen. Der Leiterplattenhalter 2 mit der Leiterplatte 3 ist hierbei direkt auf dem optischen Gehäuse 6 angeordnet. Hierzu wird eine nicht lösliche Verbindung verwendet, vorteilhafterweise eine Verklebung B.

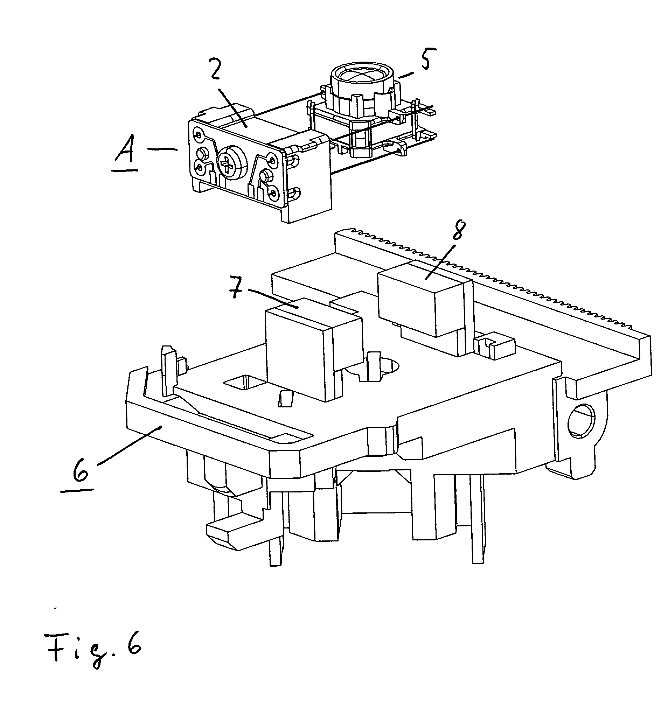

Die Anordnung der Figur 4 ist in der Figur 5 in einer Seitenansicht dargestellt. Hierdurch wird ein Klebespalt b sichtbar, der zumindest teilweise mit einem Kleber b' aufgefüllt ist. Andere Füllmaterialien können ebenfalls verwendet werden. Vor dem Verkleben muss jedoch die optische Abtasteinheit A geometrisch positioniert werden, da die Abtasteinheit A nach der Verklebung nicht mehr verstellt werden kann. Die Positionierung der optischen Abtasteinheit A wird in nachfolgenden Figuren näher erläutert.

Die Anordnung nach den Figuren 4 und 5 ist in der Figur 6 in einer Explosionsansicht dargestellt. Hierdurch wird sichtbar, dass das optische Gehäuse 6 Verstellschrauben, Kugelfläche sowie Feder nicht mehr benötigt, und bei der optischen Abtasteinheit A die Stahlgrundplatte sowie die der Kugelfläche entsprechenden Passform weggefallen sind. Hierdurch fehlt zwar der magnetische Rückschluss für die beiden Magnete 7 und 8, dies kann jedoch durch stärkere Magnete ausgeglichen werden, oder beispielsweise durch eine Stahlplatte, nicht dargestellt, die auf dem optischen Gehäuse 6 zwischen den beiden Magneten zur Bündelung des magnetischen Rückflusses angeordnet ist.

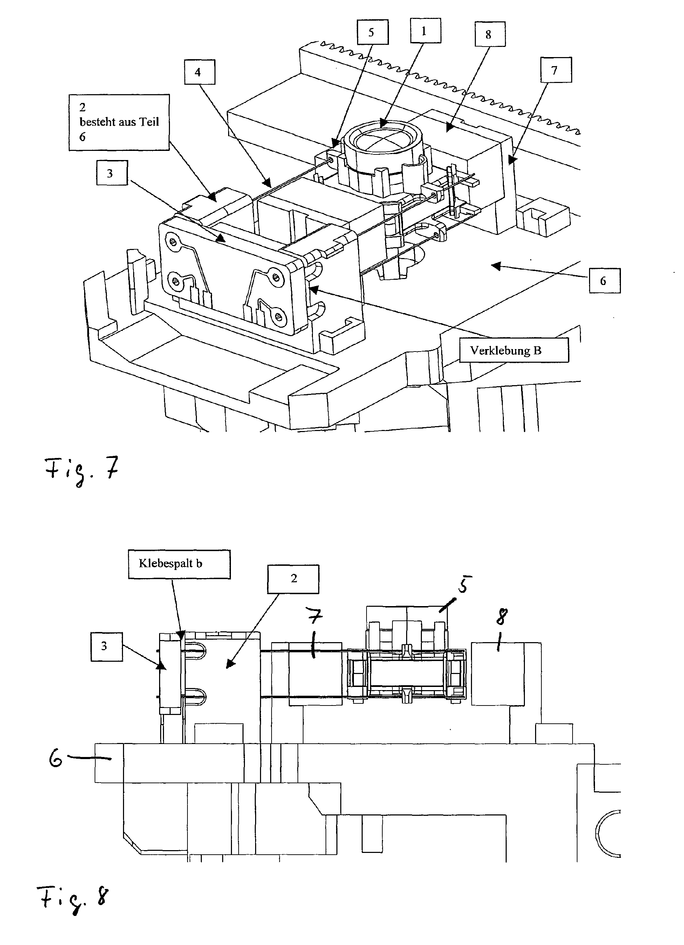

Ein weiteres Ausführungsbeispiel der Erfindung ist in der Figur 7 in einer Isoansicht dargestellt. Die einzelnen Bauteile entsprechen hierbei im wesentlichen den Bauteilen der Figur 4. Hier ist jedoch der Leiterplattenhalter 2 ohne eine Justierung auf dem optischen Gehäuse 6 befestigt, bzw. ist ein Teil des Gehäuses 6. Die Leiterplatte 3 ist hier eine stabilere Version, die insbesondere dicker ist als die in der Figur 4 dargestellten Leiterplatte. Die optische Justierung wird hierbei über die Leiterplatte 3 durchgeführt, bevor diese an dem Leiterplattenhalter 2 befestigt wird. Zur Fixierung der optischen Justierung wird hier ebenfalls über eine Verklebung B das Volumen des Klebespalts b zumindest teilweise durch einen Kleber aufgefüllt.

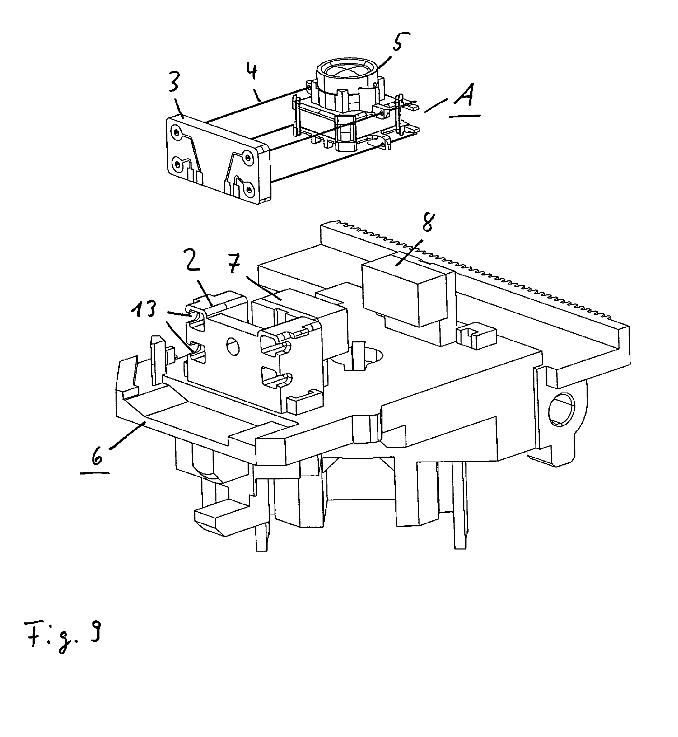

Dies wird anhand der Figur 8 ersichtlich, die in einer Seitenansicht die Anordnung nach der Figur 7 darstellt. Hierbei ist sichtbar, dass das optische Gehäuse 6 mit dem Leiterplattenhalter 2 ohne irgendwelchen Abstand beziehungsweise Spalt auf dem optischen Gehäuse 6 befestigt ist, bzw verbunden ist. Die Leiterplatte 3 kann hierbei ebenfalls in zwei Drehrichtungen eingestellt werden, beispielsweise über einen entsprechend empfindlichen Positioniermechanismus, der an der Leiterplatte 3 angreift. Der nach der optischen Justierung verbleibende Klebespalt b wird hier wie in dem vorangehenden Ausführungsbeispiel durch ein Füllmaterial, insbesondere einen Kleber, hier nicht dargestellt, ganz oder zumindest teilweise aufgefüllt.

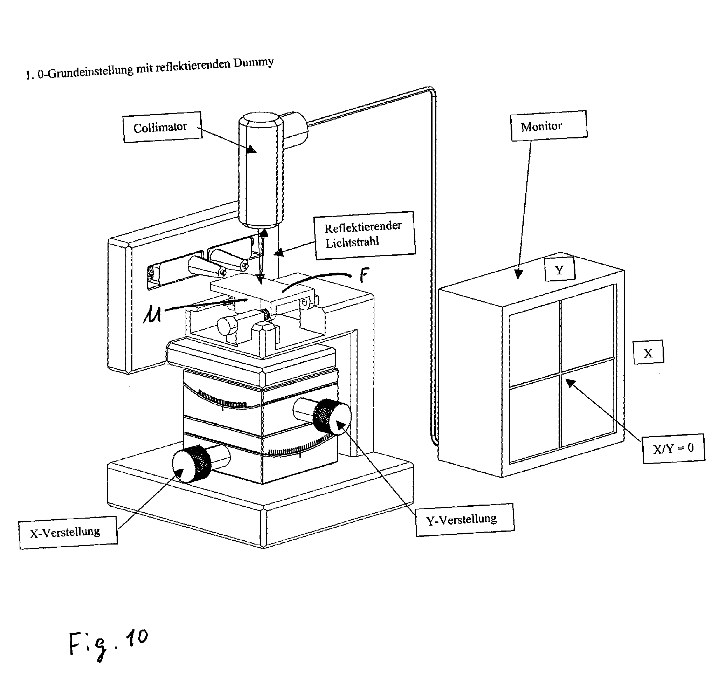

In der Figur 9 ist die Anordnung nach der Figur 7 in einer Explosionsansicht dargestellt, die der Anordnung vor dem Justieren entspricht. Um die Leiterplatte 3 mit dem Linsenhalter 5 in dem Leiterplattenhalter 2 anzuordnen, muss dieser entsprechende vertikale Öffnungen aufweisen, oder die Drähte 4 müssen von der Leiterplatte 3 gelöst werden, beziehungsweise der Linsenhalter 5 wird über die Drähte 4 an der Leiterplatte 3 montiert, derart, dass die Drähte 4, bevor sie an der Leiterplatte 3 befestigt werden, durch die Öffnungen 13 hindurchgeführt werden.

Bei diesem Ausführungsbeispiel kann daher der Leiterplattenhalter 2 aus dem optischen Gehäuse 6 mitgeformt werden. Die Leiterplatte 3 muss hierbei jedoch für eine genaue Justierung stabiler als bisher ausgelegt werden. Die Justierung der Leiterplatte 3 alleine entspricht jedoch der selben Verkippung, wie anhand der Figuren 4 bis 6 vorgenommen, bei der die Leiterplatte 3 zusammen mit dem Leiterplattenhalter 2 verkippt wird. Bei beiden Ausführungsbeispielen wird hierdurch über das Verstellen der optischen Abtasteinheit A die Fokuslinse 1 eingestellt.

Die optische Abtasteinheit A wird nach dem Ausführungsbeispiel nach den Figuren 7 bis 9 besonders kompakt. Für beide Ausführungsbeispiele werden jedoch weniger Teile benötigt, so dass die Kosten für das optische Gehäuse 6 und/oder für die optische Abtasteinheit A reduziert werden können und gleichzeitig eine Gewichtsersparnis eintritt.

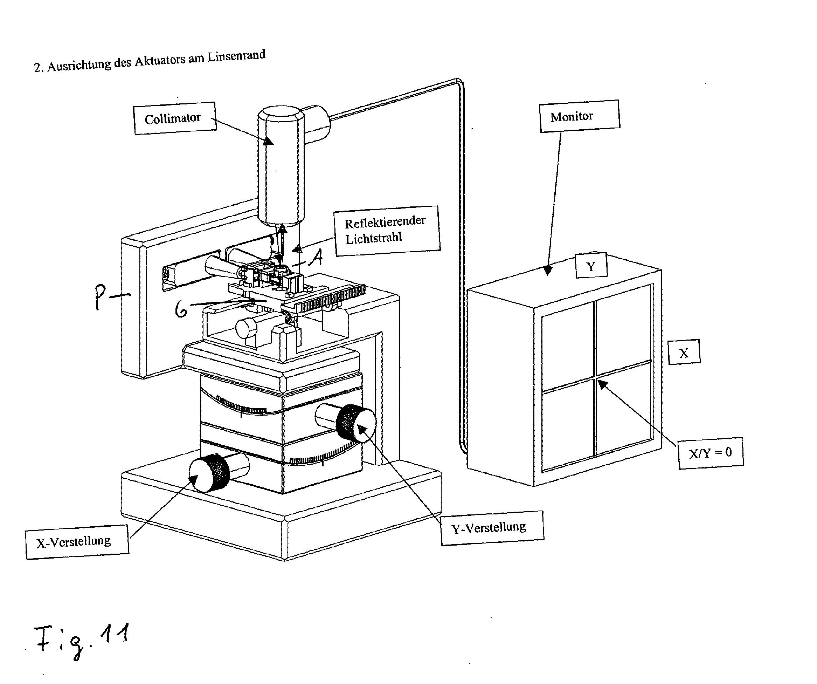

Die Justierung der optischen Abtasteinheit A wird nun anhand der Figuren 10 und 11 erklärt. Zuerst muss das optische Gehäuse 6 in bezug auf einen optischen Pfad mit Hilfe eines Kollimators eingestellt werden. Das optische Gehäuse 6 ist hierbei durch ein Dummymodul M ersetzt, das diesem entspricht und insbesondere eine obere reflektierende Fläche F aufweist, die der Fläche des optischen Gehäuses 6 entspricht, auf der die optische Abtasteinheit A montiert wird. Der Kollimator beziehungsweise das Dummymodul M müssen hierbei so ausgerichtet sein, dass der reflektierende Lichtstrahl genau senkrecht zur Fläche F zurückreflektiert wird. Das zurückreflektierte Licht wird über ein Fadenkreuz eines am Kollimator angeschlossenen Monitors überwacht.

Ist der Kollimator eingestellt, so wird das Dummymodul M durch ein optisches Gehäuse 6, wie in der Figur 11 dargestellt, ersetzt. Anschließend wird die optische Abtasteinheit A mit Hilfe eines Positioniermechanismus P und einer X und Y Verstellung über dem optischen Gehäuse 6 ausgerichtet.

Die optische Abtasteinheit A wird hierbei von dem Positioniermechanismus über den Leiterplattenhalter der Abtasteinheit A gehalten, wenn eine Abtasteinheit nach der Figur 4 verwendet wird. Bei einer optischen Abtasteinheit nach der Figur 7 hält der Positioniermechanismus P direkt die Leiterplatte der optischen Abtasteinheit. Die optische Abtasteinheit mit der Fokuslinse wird hierbei ebenfalls auf einen senkrecht reflektierenden Lichtstrahl über den Kollimator und den Monitor ausgerichtet. Anschließend wird die Abtasteinheit A mit dem optischen Gehäuse 6 verklebt, wie vorangehend beschrieben.

Der Aufwand ist hierbei der gleiche, wie bei der Justierung einer optischen Abtasteinheit nach dem Stand der Technik. Hier musste ebenfalls zuerst der Kollimator ausgerichtet werden, und die optische Abtasteinheit musste über die Verstellschrauben 10 individuell eingestellt werden, um insbesondere Fertigungstoleranzen der Fokuslinse auszugleichen.

Die Justierung der optischen Abtasteinheit A ist hier jedoch nur beispielhaft erklärt, es sind weitere Einstellmechanismen bekannt, die ebenfalls verwendet werden können.

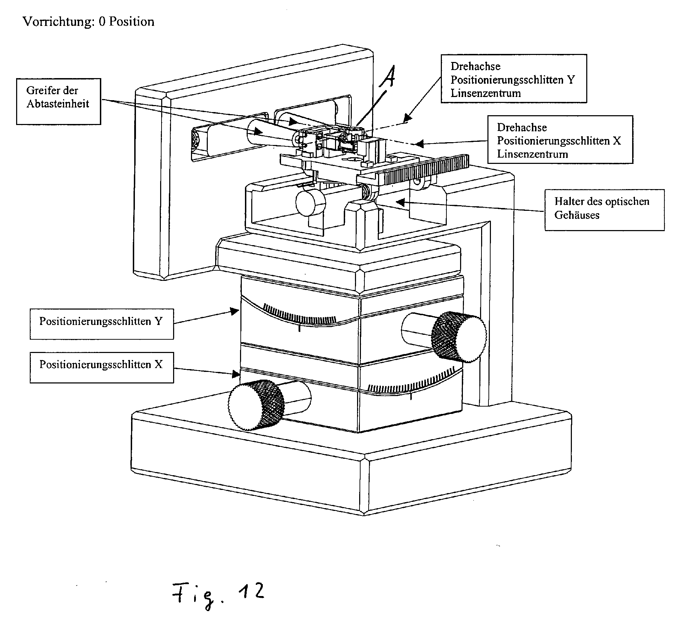

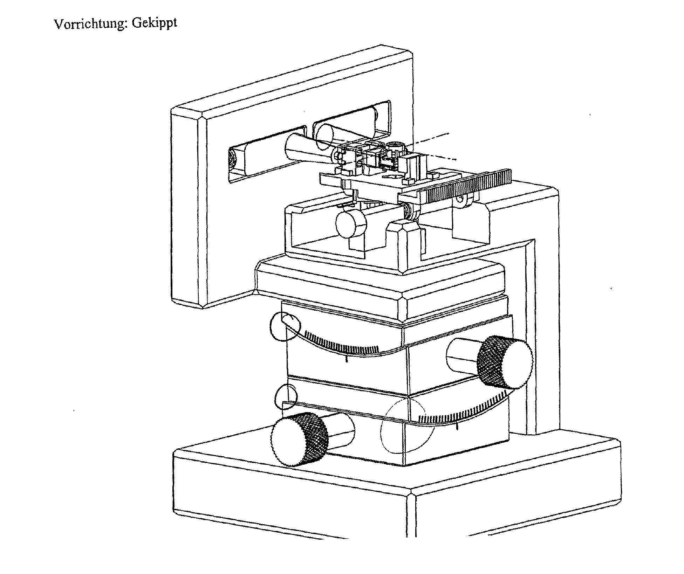

In der Figur 12 ist eine optische Abtasteinheit A vor der Justierung dargestellt. Eingezeichnet sind weiterhin die beiden Drehachsen, über die die Abtasteinheit A mit den beiden Positionierungsschlitten X und Y gedreht werden kann. In der Anordnung nach der Figur 13 ist die optische Abtasteinheit verkippt zur Justierung, wie ersichtlich an den Kanten der Positionierungsschlitten.

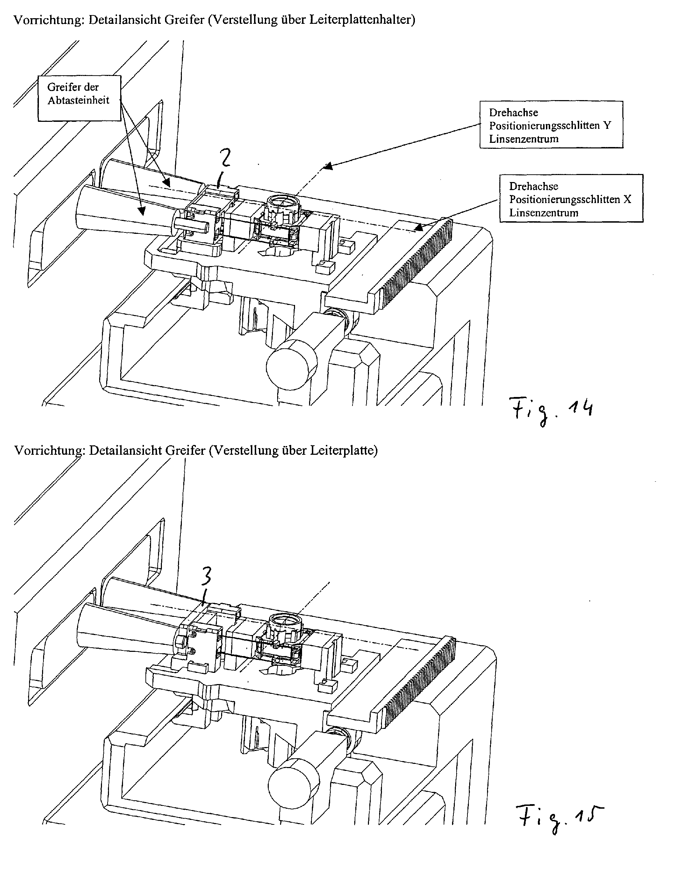

In der Figur 14 ist eine Anordnung dargestellt, bei der der Positionierungsmechanismus den Leiterplattenhalter 2 hält. In der Figur 15 ist eine Anordnung dargestellt, bei der der Positionierungsmechanismus eine verstärkte Leiterplatte 3 hält zur Justierung.

Die in den Figuren 4 bis 9 dargestellten Ausführungsbeispiele sowie die anhand der Figuren 10 bis 15 erläuterten Positionierungen dienen nur zur Erläuterung der vorliegenden Erfindung, weitere Ausgestaltungen der Erfindung liegen im handwerklichen Bereich eines Fachmannes. Insbesondere können anstatt einer Verklebung verschiedenste andere Verfahren verwendet werden, sowohl lösliche als auch nicht lösliche Verbindungen, ebenfalls metallische oder nicht metallische Materialien. Für die Justierung der optischen Abtasteinheit auf dem optischen Gehäuse können ebenfalls verschiedenste Verfahren verwendet werden.

## Patentansprüche

1. Verfahren zur Anordnung einer optischen Abtasteinheit (A) auf einem optischen Gehäuse (6), **dadurch gekennzeichnet, dass** die optische Abtasteinheit über dem optischen Gehäuse justiert wird und ohne Verwendung einer Stahlgrundplatte nach der Justierung auf dem optischen Gehäuse befestigt wird.

2. Verfahren nach Anspruch 1, **dadurch gekennzeichnet, dass** die optische Abtasteinheit über einen Positioniermechanismus derart über dem optischen Gehäuse justiert wird, dass ein Luftspalt zwischen der optischen Abtasteinheit und dem optischen Gehäuse verbleibt.

3. Verfahren nach Anspruch 1 oder 2, **dadurch gekennzeichnet, dass** die optische Abtasteinheit unter Verwendung eines Klebers oder eines anderen Befestigungsmittels nach der Justierung auf dem optischen Gehäuse befestigt wird.

4. Verfahren nach Anspruch 1, 2 oder 3, **dadurch gekennzeichnet, dass** ein nach der Justierung verbleibender Luftspalt zumindest teilweise durch einen Kleber oder ein Füllmittel aufgefüllt wird, so dass die optische Abtasteinheit nach der Justierung auf dem optischen Gehäuse fixiert ist.

5. Verfahren nach einem der vorangehenden Ansprüche, **dadurch gekennzeichnet, dass** der Positioniermechanismus entweder an einem Leiterplattenhalter (2) angreift, oder an einer verstärkten Leiterplatte (3) zur Justierung der optischen Abtasteinheit.

6. Optisches Modul beinhaltend ein optisches Gehäuse (6) und eine optische Abtasteinheit (A), **dadurch gekennzeichnet, dass** die optische Abtasteinheit (A) ohne eine Stahlgrundplatte auf dem optischen Gehäuse (6) fixiert ist.

7. Optisches Modul nach Anspruch 6, **dadurch gekennzeichnet, dass** die optische Abtasteinheit (A) über einen Leiterplattenhalter (2) oder über eine Leiterplatte (3) auf dem optischen Gehäuse fixiert ist.

8. Optisches Modul nach Anspruch 6 oder 7, **dadurch gekennzeichnet, dass** ein Luftspalt zwischen dem optischen Gehäuse (6) und der optischen Abtasteinheit (A) durch einen Kleber (b') beziehungsweise ein Füllmaterial aufgefüllt ist.
